# EUROPEAN PATENT SPECIFICATION

(11) **EP 2 250 240 B1**
(45) Date of publication and mention of the grant of the patent: **17.07.2013**
(21) Application number: 09716686.2
(22) Date of filing: 06.03.2009
(51) Int. Cl.: C10L 3/10, B01D 53/22, B01D 53/26

(54) **EMISSION TREATMENT PROCESS FROM NATURAL GAS DEHYDRATORS**
VERFAHREN zur Behandlung von Emissionen aus der ERDGASTROCKNUNG
PROCÉDÉ DE TRAITEMENT D'ÉMISSIONS PROVENANT DE DÉSHYDRATEURS DE GAZ NATUREL

(30) Priority: 07.03.2008 US 34559
(43) Date of publication of application: 17.11.2010
(73) Proprietor: Vaperma Inc., St. Romuald, Québec G6W 5M6 (CA)
(72) Inventor: NOEL, Gaetan, St-Hubert Québec J3Y 8Y1 (CA); COTE, Pierre, Lucien, Dundas Ontario L9H 3M6 (CA)
(74) Representative: Schütte, Hartmut
(86) International application number: PCT/CA2009/000282
(87) International publication number: WO 2009/109052

(56) References cited:
- EP-A1- 0 778 068
- EP-A1- 0 778 068
- US-A- 5 034 025
- US-A- 5 350 519
- US-A1- 2004 079 228

## Description

This is a non-provisional of, and claims priority from, US application serial number 61/034,559, filed on March 7, 2008 by Gaetan Noel and Pierre Cote entitled EMISSION TREATMENT PROCESS FROM NATURAL GAS DEHYDRATORS

### Field

This specification relates to the treatment of emissions related to the dehydration of natural gas.

### Background

The following is not an admission that anything discussed below is citable as prior art or part of the common general knowledge of persons skilled in the art.

Natural gas must be dehydrated before transportation in pipelines to avoid hydrate formation and corrosion. Most dehydrators use a TEG (tri-ethylene glycol) solvent or other glycol solvent to remove the water in the gas, and a gas re-boiler is used to boil the water off the glycol. The dehydrator releases waste gases and vapors, principally through venting, flaring or incineration.

US 6,010,674 (National Tank Company) describes a combustor to incinerate the organics from the off-gas mixture.

US 6,789,288 (Membrane Technology Research) describes a pervaporation process for glycol drying.

US 6,984,257 (R.T. Heath and F.D. Heath) and US 5,766,313 (R.T. Heath) describe a process in which off-gas from a re-boiler is condensed and re-injected to the burner. However the quantity of off-gas is normally larger than the requirement of the burner.
US 2004/079228 A1 discloses a process and an apparatus for dehydrating wet natural gas. This apparatus comprises a glycol absorber having a wet gas inlet line, a dry gas outlet and a desiccant outlet line. The apparatus further comprises a membrane separation unit having a feed liquid inlet line 205, a permeate vapor outlet line and a feed liquid outlet line. The second outlet of the desiccant outlet line is connected to the feed liquid inlet line of the membrane unit.
EP 0 778 068 A1 a process and an apparatus for the dehydration of a gas, where the gas values should all be substantially recovered as dehydrated gas. The process uses membrane dryers and provides a sweep gas for each of the dryers. The sweep gas is recovered and used again as a sweep gas.
US 5,034,025 A discloses a process and an apparatus that perform the extraction of water vapor from a gas stream through a vapor separation membrane to produce a dehydrated gas.

US 6,551,379 and RE39,944 (R.T. Heath) describe using a portion of the TEG flow through an ejector to create a vacuum to improve the separation of non-condensable gases.

International Patent Application No. PCT/CA2004/001047 to Cranford et al., filed on July 16, 2004 and published as WO 2005/007277 A1 on January 27, 2005, describes an asymmetric integrally skinned membrane comprising a polyimide and another polymer selected from the group consisting of polyvinylpyrrolidone, sulfonated polyetherketones and mixtures thereof. The membrane is substantially insoluble in an organic solvent, substantially defect free and is useful as a vapor separation membrane. Methods for preparing asymmetric integrally skinned polyimide membranes are also disclosed. The membranes can have a vapor permeance to water at least 1 x 10⁻⁷ mol/m²sPa at a temperature of about 30 °C to about 200 °C. The membrane may have a vapor permeance selectivity of at least 50, preferably at least 250, for water/ethanol at a temperature of about 140 °C. This International publication number WO 2005/007277 A1 is incorporated herein in its entirety by this reference to it.

### Introduction

The off-gas, for example from the stripping system of an existing glycol-based dehydration unit, contains water vapor, methane, BTEX (benzene, toluene, ethylbenzene, xylene), and VOCs (volatile organic compounds)). This off-gas is sent to a gas separation membrane system for dehydration. The gas separation membrane has a high selectivity for water over organic compounds and may be an integrally skinned asymmetric polyimide membrane as described in WO2005/007277A1. The driving force for water permeation is established by applying a vacuum on the permeate side of the membrane unit or by flowing a sweep gas, for example warm and dry air, through the permeate side of the unit. The basic glycol based dehydration process components such as the contactor and stripping system, for example still and flash tanks, are still used on the front end. The dehydrated off-gas is recycled to the product natural gas stream, for example to the inlet of the pipeline compressor or in its gas fuel line, to the inlet of the dehydrator or directly into the pipeline. This process reduces, or substantially eliminates, the emission of toxic organic compounds and green-house gases from the dehydrator, recovers valuable methane gas and ultimately reduces operating costs. The membrane unit can be retro-fitted to existing glycol dehydrators or made as part of a new system.

### Figures

Figure 1 is a schematic diagram of a dehydration system with a membrane unit.

Figure 2 shows a prior art natural gas dehydrator.

Figure 3 shows a process flow diagram of a system as in Figure 1 as used in a 10 MMSCFD natural gas dehydration system.

### Detailed Description

Various apparatuses or processes will be described below to provide an example of an embodiment of each claimed invention. It is possible that an apparatus or process described below is not an embodiment of any claimed invention.

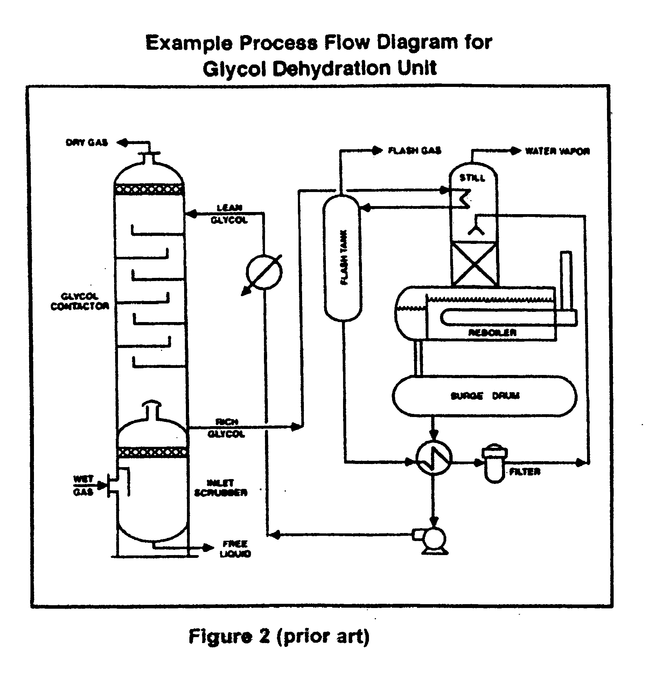

The key elements of a prior art natural gas glycol (or TEG) dehydrator are illustrated in Figure 2. Natural gas is dehydrated in a contactor, counter-current with a glycol solution. The glycol solution is regenerated in a stripping system (still and flash tank) and recycled. Water vapor, methane, BTEX and other VOCs are emitted from the stripping system and released to the atmosphere. Glycol dehydrators are described in Chapter 20 of the Engineering Data Book published by the Gas Processors Supply Association (2004) which is incorporated herein by this reference to it. The emissions of BTEX, VOCs and methane are health and environmental hazards. The emitted methane is a greenhouse gas and also a product that could otherwise be sold.

Methane emissions and consumption come from gas-driven TEG pumps, fuel-process consumption, instrument gas consumption and stripping gas as described in Table 1. The total amount of methane emitted represents about 0.5% of the methane treated. Hydrocarbons and BTEX which are carried by TEG from the contactor to the stripping system are also emitted with the off-gas. Water vapor is also present in the off-gas which makes the off-gas very corrosive and difficult to treat.

**TABLE 1**

| **Estimated consumption/emission of methane for a 10 MMscfd dehydrator** | | |
|---|---|---|
| **Source** | **Methane Nm³/y** | **Energy GJ/y** |
| Glycol pump | 211,000 | 7,827 |
| Reboiler fuel | 66,000 | 2,437 |
| Stripping gas | 191,000 | 7,096 |
| Instruments | 5,000 | 195 |
| Total | 473,000 | 17,555 |

Because of the health and environmental impacts of glycol dehydrator emissions, regulations are becoming more stringent and address both the emission of health-related contaminants such as BTEX and green-house gases such as methane. There is a need to improve existing installations to design new dehydrators to have lower emissions.

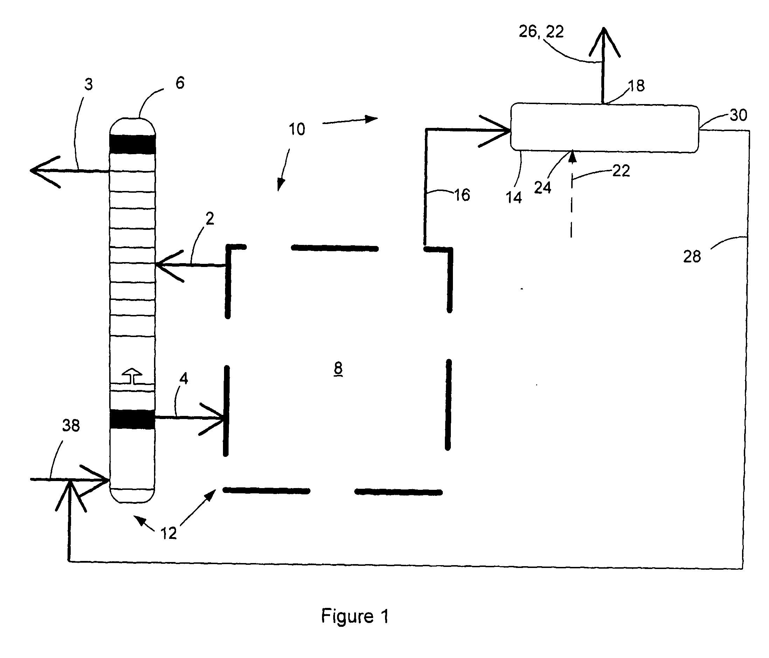

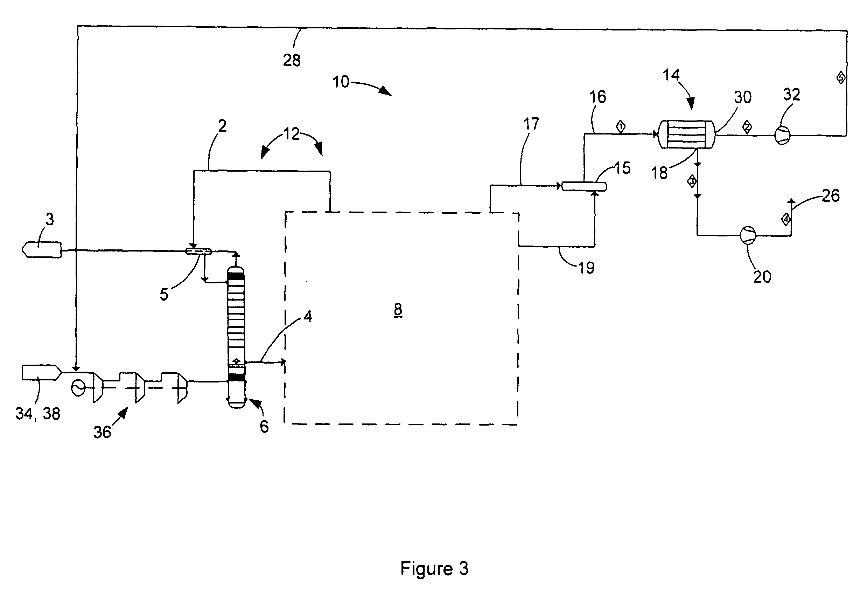

A dehydration system 10 using a gas or vapor separation membrane unit 14 is shown in Figures 1 and 3. The vapor separation membranes in the membrane unit 14 may be as described in WO2005/007277A1. A module suitable for use with such membranes is described in US Patent Application serial number 12/117,007, filed on May 8, 2008, entitled HOLLOW FIBRE MEMBRANE MODULE, which is incorporated herein in its entirety by this reference to it. Such membranes and membrane separation units 14 are available under the trade-mark SIFTEK from Vaperma Inc.

The system 10 is based on a conventional TEG dehydration unit 12 having a TEG contactor 6 and a TEG regeneration unit 8. Wet natural gas 9 flows into an inlet 38 of the dehydration unit 12. Rich TEG 4 flows from the TEG contactor 6 to the regeneration unit 8. Lean TEG 2 flows from the regeneration unit 8 to the contactor 6. Gases leave the dehydration unit 12 through an outlet 3 optionally after passing through a heat exchanger 5 which the lean TEG 2 also flows through.

The gas that would ordinarily be released from the dehydration unit 12 as a contaminated off-gas 16 is sent to a membrane unit 14 for dehydration. Gas 16 to be sent to the membrane unit 14 can be taken from the still, the flash tank, both the still and flash tank, or another part of the dehydrator where these gases are collected and can be released. A collector 15 may be used to collect, for example, flash tank emissions 17 and TEG regenerator emissions 19. A vacuum can be applied to the permeate outlet 18 of the membrane unit 14 by a permeate compressor 20, or vacuum pump, as shown in Figure 3, to withdraw water vapor 26 from the gas stream and thereby produce a dehydrated gas 28 at the retentate outlet 30 of the membrane unit 14. Optionally, a sweep gas 22 can be passed into an inlet 24 on the permeate side of the membrane unit 14, through the permeate side of the membrane unit 14, and out of the permeate outlet 18, as shown as an option in Figure 1, if desired to assist with water vapour removal. The flow of dehydrated gas 28 may be driven by a retentate compressor 32. The off-gas 16 from the dehydration unit 12 contains a large portion of the water vapour present in the wet natural gas 9 fed to the inlet 38 of the dehydration unit, but in a much smaller gas flow. The concentration of water vapour in the off-gas 16 may be twenty times or more than the concentration of water vapour in the wet natural gas 9. A pump or compressor capable of handling the off-gas 16 would be very expensive because water vapour in high concentration tends to condense when pressurized in a pump or compressor. Placing retentate compressor 32 downstream of the membrane unit 14, where the water content is low, avoids operation in a high water vapour concentration. Permeate compressor 20 operates in a high water vapour concentration but operates at or below atmospheric pressure where the problems of condensation are not as significant. If necessary, a condenser may be added in line between the membrane unit 14 and the permeate compressor 20.

The dehydrated gas 28 can be sent to an inlet 38 of the dehydration unit 12, the inlet of a pipeline compressor upstream of the dehydration unit, directly into the product natural gas pipeline or otherwise reused for example by burning it to generate steam or electricity. In Figure 3, the outlet 30 from the membrane unit 14 is connected to the inlet 34 of a contactor inlet compressor 36. The dehydrated recovered emission gas (REG) 28, which is the retentate from the membrane unit 14, is compressed by a retentate compressor 32 to the inlet pressure of a contactor inlet compressor 36. Compared to an alternative connection of the membrane unit 14 retentate line to the gas outlet 3 from the contactor 6, this reduces the required pressure gain through retentate compressor 32. The water content of the REG 28 also only needs to be reduced sufficiently to be able to compress the REG 28 to mix into the natural gas upstream of the dehydrator 12 rather than to the specifications of the pipeline.

All or substantially all of the off-gas can be sent to the membrane unit 14. Because the dehydrated gas is recycled, the system 10 reduces emissions, preferably bringing the emissions close to zero. A side-by-side comparison of a conventional dehydrator using an electric glycol pump and stripping gas and the process and apparatus of Figure 3 is presented in Table 2 below, showing a 97.7% reduction of emissions and a 3 year pay-back. Various operating parameters for the system 10 are shown in Table 3 below. The stream numbers 1 to 5 in Table 3 correspond to the flows through pipes in Figure 3 marked with a diamond having the corresponding stream number inside of the diamond.

**Table 2**

| Value Proposition -10 MMSCFD Dehydration Plant | | | |
|---|---|---|---|
| | | Conventional | Membrane |
| Capital Cost, k$ Operating cost (k$/yr) | | 0 | 250 |
| | Gas | 56.5 | 0.2 |
| | | | |
| | Electricity | 0.0 | 6.9 |
| | Membrane replacement | 0.0 | 3.3 |
| | Water disposal | 0.0 | 1.0 |
| | Maintenance & Labour | 0.0 | 2.0 |
| | Miscellaneous | 0.0 | 2.0 |
| | Total Annual Cost | 56.5 | 15.4 |
| Emissions (mt/yr) | BTEX | 2.4 | 0.0 |
| | | | |
| | HAP | 3.5 | 0.0 |
| | VOC | 19.2 | 0.1 |
| | Methane-ethane-others | 153.3 | 0.4 |
| GHG emission reduction | equivalent CO2 (mt/yr) | | 2673 |
| | | | |
| | Carbon Trading @ 15 $US/ton CO2 (k$/yr) | | 44.1 |
| profitability | Capital, k$ | | 250 |
| | Savings, k$/yr | Gas Recovered | 41 |
| | | GHG credits | 44 |
| | | total | 85 |
| | Payback, years | | 2.9 |

**Table 3**

| | **off gas to MEM** | **MEM retentate to compressor** | **MEM permeate** | **MEM permeate to atmosphere** | **MEM retentate to pipeline** |
|---|---|---|---|---|---|
| stream no | 1 | 2 | 3 | 4 | 5 |
| flow rate, kg/hr | 37.0 | 19 | 17.71 | 17.71 | 19 |
| vapor fraction (1 or 0 only) | 1.0000 | 1.0000 | 1.0000 | 1.0000 | 1.0000 |
| rest of gas, % wt | 8.96% | 17.16% | 0.02% | 0.02% | 17.16% |
| methane, % wt | 38.34% | 73.43% | 0.11% | 0.11% | 73.43% |
| water content, % mass | 52.70% | 9.41% | 99.88% | 99.88% | 9.41% |
| T, deg. C | 100.0 | 100.0 | 100.0 | 230.6 | 172.8 |
| P, kPa abs | 101.3 | 98.6 | 10.00 | 101.33 | 750.0 |
| enthalpy, kJ/kg | | | 2671.1 | 2916.9 | |
| GJ/hr | | | 0.047 | 0.052 | |
| m3/hr (gas) or l/min (liq.) | 62.4 | 33.1 | 305 | 41 | 5.2 |
| V, m3/kg (gas) or kg/l (liq.) | 1.6856 | 1.7179 | 17.2295 | 2.2955 | 0.2700 |
| Cp, kJ/kg-K | | | 1.884 | 1.884 | |

The membrane unit 14 removes water vapor selectively from the off-gas. The water vapor may be discharged to the atmosphere. The selective removal of water from the off-gas enables recompression of the methane and BTEX since compressors are sensitive to water vapor. The water is released as vapour and so the process does not produce a liquid discharge.

## Claims

1. A process comprising the steps of,
collecting a gas containing water vapor and one or more of BTEX, VOCs or methane from a natural gas dehydrator; and,
extracting water vapor from the gas through a vapor separation membrane to produce a dehydrated gas still containing one or more of BTEX, VOCs or methane; and returning the dehydrated gas to a natural gas stream or recycling the dehydrated gas to the natural gas dehydrator.

2. The process of claim 1 further comprising compressing the dehydrated gas before returning the dehydrated gas to the natural gas stream.

3. The process of claim 1 or 2 wherein the dehydrated gas is mixed with wet natural gas before the wet natural gas is compressed upstream of the natural gas dehydrator.

4. An apparatus comprising,
a) a natural gas dehydration unit having a wet gas inlet, a dry gas outlet, and a second gas outlet; and,
b) a vapor separation membrane unit having a feed inlet, a retentate outlet, and a permeate outlet,
wherein the second gas outlet of the dehydration unit is connected to the feed inlet of the membrane unit;
wherein the retentate outlet of the membrane unit is connected in communication with at least one of a pipe carrying natural gas and to a pipe carrying natural gas upstream of the natural gas dehydration unit.

5. The apparatus of claim 4 wherein the retentate outlet is connected to the pipe carrying natural gas upstream of a compressor feeding into the natural gas dehydration unit.

6. The apparatus of any of claims 4 to 5 further comprising a compressor in communication with the retentate upstream of where the retentate is connected to the at least one of the pipe carrying natural gas exiting the natural gas dehydration unit and the pipe carrying natural gas dehydration unit.

## Patentansprüche

1. Verfahren, umfassend die Schritte
Auffangen eines Gases, das Wasserdampf und entweder BTEX und/oder VOC und/oder Methan enthält, von einem Erdgasentwässerer; und
Extrahieren von Wasserdampf aus dem Gas durch eine Dampfabscheidungsmembran zum Erhalten eines entwässerten Gases, das noch entweder BTEX und/oder VOC und/oder Methan enthält; sowie Zurückführen des entwässerten Gases in einen Erdgasstrom oder Recyceln des entwässerten Gases zum Erdgasentwässerer.

2. Verfahren gemäß Anspruch 1, weiterhin umfassend Komprimieren des entwässerten Gases vor Rückführung des entwässerten Gases in den Erdgasstrom.

3. Verfahren gemäß Anspruch 1 oder 2, wobei das entwässerte Gas mit nassem Erdgas gemischt wird, bevor das nasse Erdgas oberhalb des Erdgasentwässerers komprimiert wird.

4. Vorrichtung, umfassend
a) eine Erdgas-Entwässerungseinrichtung mit einem Nassgaseinlass, einem Trockengasauslass, und einem zweiten Gasauslass; und
b) eine Dampfabscheidungsmembraneinrichtung mit einer Beschickungsöffnung, einem Retentatauslass, und einem Permeatauslass,
wobei der zweite Gasauslass der Entwässerungseinrichtung mit der Beschickungsöffnung der Membraneinrichtung verbunden ist;
wobei der Retentatauslass der Membraneinrichtung in Übertragungsverbindung mit wenigstens entweder einem Erdgas führenden Rohr und/oder einem Erdgas führenden Rohr oberhalb der Erdgasentwässerungseinrichtung steht.

5. Vorrichtung gemäß Anspruch 4, wobei der Retentatauslass mit dem Erdgas führenden Rohr oberhalb eines Kompressors angeordnet ist, der in die Erdgasentwässerungseinrichtung hineinführt.

6. Vorrichtung gemäß einem der Ansprüche 4 bis 5, ferner aufweisend einen Kompressor in Übertragung mit dem Retentat oberhalb der Stelle, wo das Retentat wenigstens mit dem Erdgas führenden Rohr, das aus der Erdgasentwässerungseinrichtung austritt, und/oder mit dem Erdgas führenden Rohr [sic; AdÜ] Entwässerungseinrichtung verbunden ist.

## Revendications

1. Procédé comprenant les étapes de
la collecte d'un gaz contenant de la vapeur d'eau et d'un ou plusieurs des BTEX, VOCS ou de méthane à partir d'un déshydrateur de gaz naturel ; et,
l'extraction de vapeur d'eau à partir du gaz par une membrane de séparation de vapeur afin de produire un gaz déshydraté contenant toujours un ou plusieurs des BTEX, VOCs ou méthane ; et le renvoi du gaz déshydraté à un flux de gaz naturel ou le recyclage du gaz déshydraté vers le déshydrateur de gaz naturel.

2. Procédé selon la revendication 1 comprenant en outre la compression du gaz déshydraté avant de renvoyer le gaz déshydraté au flux de gaz naturel.

3. Procédé selon la revendication 1 ou 2, le gaz déshydraté étant mélangé à un gaz naturel humide avant que ne soit compressé le gaz naturel humide en amont du déshydrateur de gaz naturel.

4. Dispositif comprenant,
a) une unité de déshydratation de gaz naturel comprenant une entrée de gaz humide, une sortie de gaz sec, et une deuxième sortie de gaz ; et,
b) une unité membranaire de séparation de vapeur munie d'une entrée d'alimentation, une sortie de rétentat et une sortie de perméat,
la deuxième sortie de gaz de l'unité de déshydratation étant reliée à l'entrée d'alimentation de l'unité membranaire ;
la sortie de rétentat de l'unité membranaire étant reliée en communication avec au moins un tuyau véhiculant du gaz naturel et à un tuyau véhiculant du gaz naturel en amont de l'unité de déshydratation de gaz naturel.

5. Dispositif selon la revendication 4, la sortie de rétentat étant connectée à un tuyau véhiculant du gaz naturel en amont d'un compresseur alimentant l'unité de déshydratation de gaz naturel.

6. Dispositif selon l'une quelconque des revendications 4 à 5, comprenant en outre un compresseur en communication avec le rétentat en amont de là où le rétentat est relié à l'au moins un des tuyaux véhiculant le gaz naturel sortant de l'unité de déshydratation de gaz naturel, ainsi que l'unité de déshydratation à tuyau véhiculant du gaz naturel.
